Europäisches Patentamt

European Patent Office

Office européen des brevets

(11) Publication number: **0 229 931**
**B1**

(12) **EUROPEAN PATENT SPECIFICATION**

(45) Date of publication of patent specification: **19.09.90**

(21) Application number: **86116418.4**

(22) Date of filing: **26.11.86**

(51) Int. Cl.⁵: **F 16 D 1/08** // B29C67/18

(54) **Apparatus for fitting a rotary member onto a rotary shaft.**

(30) Priority: **26.11.85 JP 266477/85**

(43) Date of publication of application:
**29.07.87 Bulletin 87/31**

(45) Publication of the grant of the patent:
**19.09.90 Bulletin 90/38**

(84) Designated Contracting States:
**DE GB**

(56) References cited:
**CH-A- 61 505**
**DE-C- 137 669**
**US-A-3 027 285**
**US-A-3 367 225**
**US-A-3 404 057**
**US-A-4 514 109**

(73) Proprietor: **SOMAR CORPORATION**
**11-2, Ginza 4-chome Chuo-ku**
**Tokyo (JP)**

(72) Inventor: **Hamamura, Fumio**
**25-25, Hiyoshi 5-chome Kohoku-ku**
**Yokohama-shi Kanagawa (JP)**
Inventor: **Sawada, Noriyasu**
**11-21, Minumacho**
**Hasuda-shi Saitama (JP)**
Inventor: **Fukuda, Ichio**
**26-29, Nishiarai 4-chome Adachi-ku**
**Tokyo (JP)**

(74) Representative: **Boeters, Hans Dietrich, Dr. et al**
**Boeters & Bauer Bereiteranger 15**
**D-8000 München 90 (DE)**

Courier Press, Leamington Spa, England.

## Description

Background of the Invention

This invention relates to an apparatus for fitting rotary members onto rotating shafts and more particularly to a technique effective in the application of such an apparatus for fitting winding rollers for use in a film laminator for laminating films onto the surface of an insulating base.

Printed circuit boards for use in electronic equipment such as computers are manufactured by forming a predetermined copper wiring pattern on one or both surfaces of an insulating base. A printed circuit board of this sort is made by the following process of manufacture:

A laminate consisting of a photosensitive (photoresist) resin layer and a translucent resin film (protective film) for protecting the former is formed on an electrically conductive layer provided on an insulating base by thermocompression bonding. The formation of the above layer and film by thermocompression bonding is carried out on a mass-production basis. Then a wiring pattern film is superposed on the laminate and the whole assembly exposed to light through the wiring pattern and translucent resin films for a predetermined length of time. The translucent resin film is peeled off by a peeling machine and then the photosensitive resin layer thus exposed to light is developed to form an etching mask pattern. Then the unnecessary portions of the conductive layer are removed by etching and the remaining photosensitive resin layer is removed to form a printed circuit board having a predetermined wiring pattern.

The above process of manufacturing printed circuit boards requires that the laminate consisting of the photosensitive resin layer and the translucent resin film is applied on the conductive layer of the insulating base by thermocompression bonding in a film laminator. The laminate thus bonded onto the insulating base is then cut to size corresponding to that of the insulating base out of a continuous sheet of laminate wound on a supply roller. The laminate wound on the supply roller is a three-layer one composed of a first translucent resin film, a photosensitive resin layer and a second translucent resin film as a protective layer laminate. The second translucent resin film on the side for being stuck to the photosensitive resin layer is peeled off before the remaining laminate is bonded on the insulating base. The peeled off translucent film is wound up by a winding roller.

The supply roller for use in such a film laminator consists of a sheet of laminate wound on a tubular core and is attached to a rotating shaft through a supply roller fitting member. This arrangement is intended to reduce the supply roller production cost. The supply roller fitting member is clamped by independent screw members engaging the supply roller and the rotating shaft, respectively.

For this above reason, a supply roller replacement is rather cumbersome because the work of unfastening and fastening must be done twice.

The invention as claimed is intended to remedy this problem. It provides a simple and economic construction of both the apparatus itself and the corresponding engagement means of the rotary member same as an economic handling when the rotary member is to be mounted, released or replaced.

An apparatus comprising the means mentioned in the preamble of claim 1 is disclosed in CH—A—61 505. However, in this case the interior of the rotary member, e.g. a pulley, is of a complicated shape and requires a relatively large quantity of material which renders this design uneconomic at least where the rotary member is to be produced at a mass-production scale. In contrast to this, with the solution of the present invention, e.g. cheap disposable hollow-cylindrical plastic bodies can be used as the cores of the aforementioned winding rollers.

In the following a preferred embodiment of the invention is described in connection with a film laminator of the type mentioned before. In the accompanying drawings

Fig. 1 is a schematic view of the respective film laminator.

Fig. 2 is a partial perspective view of a winding roller for use in the film laminator shown in Fig. 1.

Fig. 3 is a partial perspective view of a supply roller for use in the film laminator shown in Fig. 1.

Fig. 4 is a partial perspective view of supports for the winding and supply rollers.

Fig. 5 is a sectional view in the state wherein the winding and supply rollers are fitted to the supports.

Fig. 6 is a sectional view of an apparatus in accordance with the invention in the form of a supply roller fitting apparatus.

Fig. 7 is an expanded exploded perspective view of the same supply roller fitting apparatus.

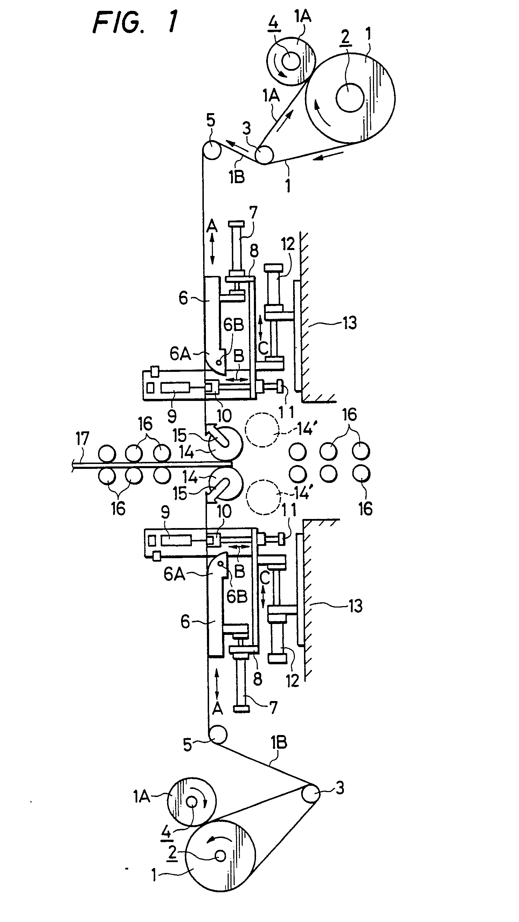

In the film laminator of Fig. 1, since parts thereof are vertically symmetrically arranged, the upper version only will be described.

As shown in Fig. 1, a three-layer laminate 1 composed of a first translucent resin film, a photosensitive resin layer and a second translucent resin film is continuously would on a supply roller 2. The second translucent resin film 1A which forms a protective film on the laminate 1 wound on the supply roller 2 is separated by a peeling roller 3 from the remaining laminate 1B composed of the photosensitive resin layer having an exposed face (adhesive face) and the first translucent resin film. The translucent resin film 1A thus separated is would up by a winding roller 4.

The front end of the laminate 1B in the supply direction is sucked by a main vacuum plate 6 after passing a tension roller 5 for applying proper tension thereto.

The main vacuum plate 6 is supported by a frame 8 through an air cylinder 7 which itself is displaceable in the direction of arrow A and used to supply the laminate 1B to an insulating base. An arcuate portion 6A at the front end of the main vacuum plate 6 contains a heater 6B to temporarily stick the front end of the laminate 1B onto the conductive layer of the insulating base by thermocompression bonding. Close to the arcuate portion 6A is provided a rotary cutter 9 for continuously cutting the laminate 1B to pieces corresponding to the size of the insulating base. A subvacuum plate 10 is installed opposite to the rotary cutter 9 for causing the front end of the cut pieces of the laminater 1B to be sucked to the arcuate portion 6A. The subvacuum plate 10 is supported by the frame 8 through an air cylinder 11 whose position is variable in the direction of arrow B. The frame 8 for supporting the main vacuum plate 6 and the subvacuum plate 10 is itself supported by a frame 13 of the apparatus body through an air cylinder 12 by which it can be displaced in the direction of arrow C. The bonding of laminate 1B to the conductive layer of the insulating base is completed by a thermocompression bonding roller 14 which is then moved from the position shown by a continuous line to the position shown by a dotted line 14'. The rear end of the laminate 1B cut to size by the rotary cutter 9 is guided by a rotary vacuum plate 15 to prevent it from crumpling before it is stuck by the roller 14.

If desired, the film laminator thus constructed sticks the laminate 1B onto both surfaces of the insulating base 17, the base being conveyed by conveyor rollers 16 under thermocompression.

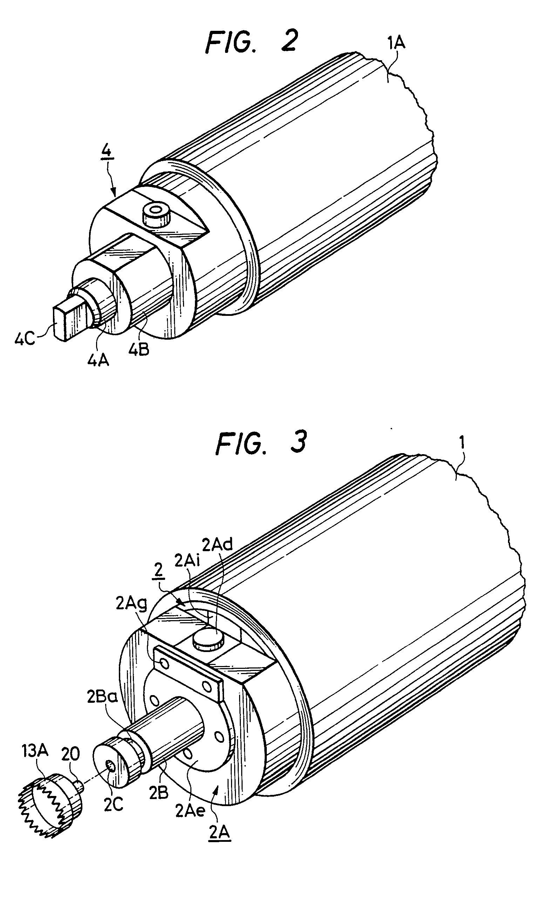

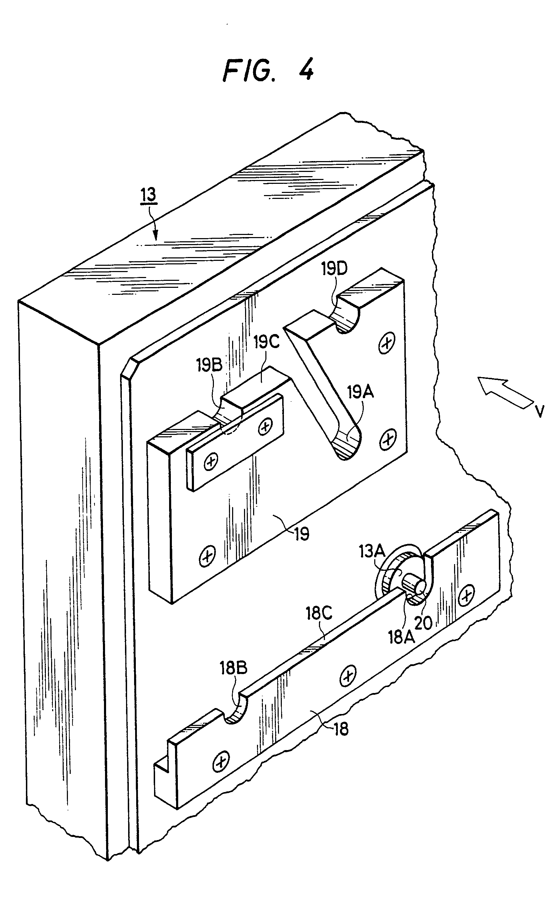

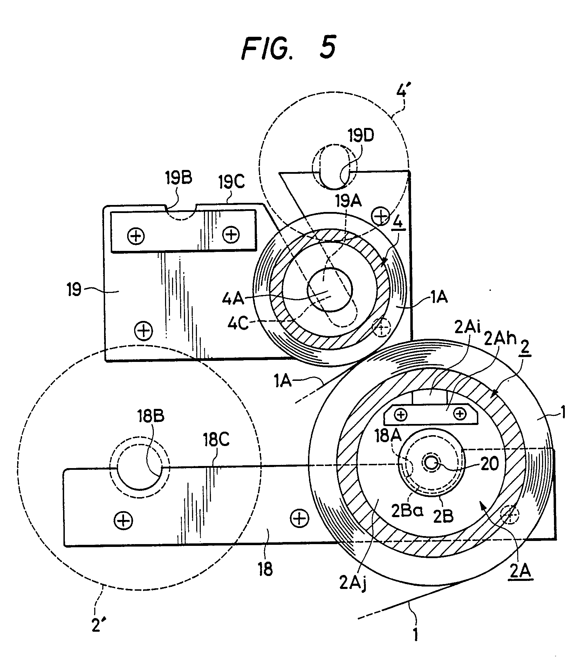

Figs. 2 and 3 concretely show the construction of the winding and, respectively, supply rollers 4, 2, whereas Fig. 4 shows the support thereof. Fig. 5 (which is a side view from Fig. 4 in the direction of arrow V) shows the state wherein the winding and supply rollers 4, 2 are mounted in the support.

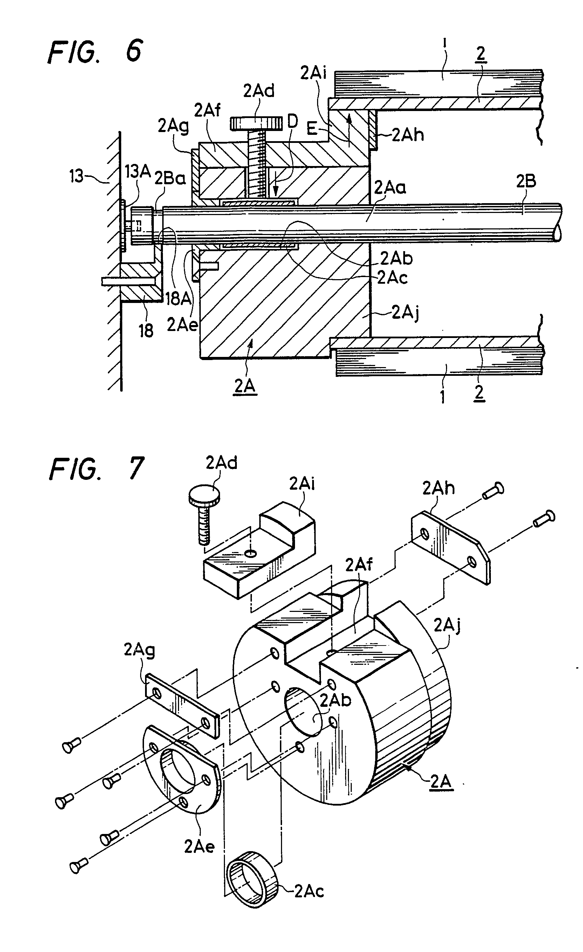

As shown in Figs. 3 and 5, the supply roller 2 is a hollow-cylindrical core with the laminate 1 wound on the circumference thereof and itself fitted to a shaft 2B through a supply roller fitting apparatus 2A in accordance with the invention. Figs. 6 and 7 show the concrete construction of the supply roller fitting apparatus 2A.

The supply roller fitting apparatus 2A is used to clamp the supply roller 2 to the shaft 2B. It includes a first press member 2Ac in the form of a sleeve fittingly received in a respective central hole 2Ab of a substantially cylindrical block member 2Aj, an offset second press member 2Ai in a peripherical, longitudinally extending guide groove 2Af of the block member 2Aj, and a screw 2Ad threaded through a longitudinally extending leg of the second press member 2Ai and extending through a radial hole of the block member 2Aj towards the first press member 2Ac. The block member 2Aj, at one end thereof, has a reduced portion fitting into the hollow supply roller 2. Two stop plates 2Ag and 2Ah attached to the fronts of the block member 2Aj by set screws keep the press member 2Ai in place within the guided groove 2Af same as a stop plate 2Ae retains the press member 2Ac in the hole 2Ab.

A shorter radial leg of the press member 2Ai is adapted to pressingly engage the internal wall of the supply roller 2 in the area where this surrounds the reduced portion of the block member 2Aj. The screw 2Ad protrudes outwardly over the longitudinal leg of the press member 2Ai outside the supply roller 2 and there has a head to be manually gripped for turning the screw. The shaft 2B fittingly extends through the press member 2Ac and a corresponding central bore of the block member 2Aj.

By threading the screw 2Ad deeper through the press member 2Ai the two press members 2Ac and 2Ai are radially spread apart in the directions of arrows D and E (Fig. 6), respectively, thus at the same time clamping either the shaft 2B and the supply roller 2. In other words: The shaft 2B and the supply roller 2 can be clamped together — or released — by a single operation.

The supply roller 2 and the supply roller-fitting apparatus 2A or press member 2Ai may be made of resin or aluminum alloy, whereas the press member 2Ad and the ring-like press member 2Ac or guide plates 2Ag, 2Ah may be composed of e.g., steel or steel alloy.

The supply roller fitting apparatus 2A thus constructed makes it possible to fit the shaft 2B to the supply roller 2 with but one tightening operation and therefore improve work efficiency. Moreover, the supply roller 2 can be manufactured inexpensively by making it cylindrical and consuming a minimal quantity of material.

The guide grooves 2Ba at both ends of the shaft 2B can be fitted in arcuate recesses 18A at one end of the support 18 installed on the frame 13, these arcuate recesses being used as a bearing for supporting the roller 2. A recess in both (or one) of the end faces of the shaft 2B is adapted to be clamped by a stub 20 of an electromagnetic clutch 13A contained in the frame 13. There is also provided an arcuate recess 18B at the other end of the support 18, in a position where a heavy supply roller 2' equipped with the supply roller fitting apparatus 2A and the shaft 2B can easily be placed temporarily for storage. The supply roller 2' thus positioned can be rolled in the guide groove 2Ba along the upper edge 18C of the support 18.

In Figs. 2, 4 and 5, the winding roller 4 is equipped with a shaft 4A through a bearing 4B. A projection 4C at the end of the shaft 4A is fitted in a U-shaped recess 19A of a support 19 installed on the frame 13 and the shaft 4A is allowed to slide in the bearing 4B, so that the winding roller 4 is rotatably supported.

An arcuate recess 19B is provided in a support 19 quite similar to the arcuate recess 18B in a position where the operator can easily place a winding roller 4 when this is to be installed. The winding roller 4 thus located may slide along the guide rail 19C of the support and installed in a position where it fits in the U-shaped recess 19A.

An arcuate recess 19D is provided in the support 19 in a position separate from the U-shaped recess 19A to receive a winding roller 4 as shown at 4 in Fig. 5 to mount the winding roller 4 temporarily detached from the U-shaped recess 19A when a supply roller 2 is to be fitted.

The foregoing description is a preferred embodiment of the disclosed device and various changes and modifications may be made in the invention without departing from the spirit and scope thereof.

Although a cylindrical supply roller 2 has been described as an example of a rotary member to be fitted to a shaft 2B by a supply roller fitting apparatus in accordance with the present invention, a columnar (solid) supply roller could be used provided that this has portions for receiving the respective second press members at both ends of the supply roller.

The present invention is also applicable to winding roller fitting members, provided the shaft 4A of the winding roller 4 is equipped with corresponding winding roller fitting members.

Generally, since the apparatus of the invention for fitting a rotary member onto a shaft comprises a first press member for pressing and fixing the shaft and a second press member for pressing and fixing the rotary member by means of rotation of only one screw, the efficiency of the work of replacing the rotary member is increased.

## Claims

1. An apparatus for firmly fitting a rotary member (2; 4) onto a shaft (2B; 4A) by clamping means, said clamping means including a first press member (2Ac) fitted to and engaging that shaft, a second press member (2Ai) engaging an internal wall portion of said rotary member (2; 4), and a screw (2Ad) threadingly engaged with at least one of said press members (2Ac, 2Ai) and arranged to spread them apart in opposite radial directions with respect to said shaft (2B; 4A), said second press member (2Ai) being received in a guide groove (2Af), the apparatus being characterized in
   that said internal wall portion of said rotary member (2; 4) is cylindrical,
   that said guide groove (2Af) is provided in a separate block member (2Aj) received in said rotary member (2; 4) at least part of said block member being fittingly surrounded by said cylindrical internal wall portion,
   that said second press member (2Ai) engages said cylindrical internal wall portion, and
   that said first press member (2Ac) consists of a sleeve fitting on said shaft (2B; 4A) and received in said block member (2Aj).

2. The apparatus of claim 1 in which said second press member (2Ai) is offset, one leg thereof extending axially in said guide groove (2Af) and receiving said screw (2Ad) whereas a radial leg engages said cylindrical internal wall portion.

3. The apparatus of any one of the preceding claims wherein said guide groove (2Af) is provided at the periphery of said block member (2Aj).

4. The apparatus of any one of the preceding claims wherein said screw (2Ad) includes a head extending outwardly from said apparatus outside of said rotary member (2; 4).

5. The apparatus of any one of the preceding claims wherein said rotary member (2; 4) is a supply or winding up roller to be frequently exchanged and having a cylindrical core such as it is used in a film laminator.

## Patentansprüche

1. Vorrichtung zum festen Anbringen eines rotierenden Elements (2; 4) auf einer Welle (2B; 4A) mit Klammermitteln, wobei die Klammermittel ein erstes Anpresselement (2Ac), das auf der Welle angebracht ist und an dieser angreift, ein zweites Anpresselement (2Ai), das mit einem Innenwandbereich des rotierenden Elements (2; 4) in Eingriff steht, und eine Schraube (2Ad) umfassen, die mit mindestens einem der Anpresselemente (2Ac, 2Ai) in Eingriff steht und dazu ausgebildet ist, diese in entgegengesetzten radialen Richtungen in bezug auf die Welle (2B; 4A) auseinanderzuspreizen, wobei das zweite Anpresselemente (2Ai) von einer Führungsnut (2Af) aufgenommen wird und wobei die Vorrichtung dadurch gekennzeichnet ist,
   daß der Innenwandbereich des rotierenden Elements (2; 4) zylindrisch ausgebildet ist,
   daß die Führungsnut (2Af) in einem separaten Blockelement (2Aj) vorgesehen ist, das von dem rotierenden Element (2; 4) aufgenommen wird, wobei mindestens ein Teil des Blockelements passend von dem zylindrischen Innenwandbereich umgeben ist,
   daß das zweite Anpresselement (2Ai) an dem zylindrischen Innenwandbereich angreift und
   daß das erste Anpresselement (2Ac) aus einer auf die Welle (2B; 4A) passenden Hülse besteht, die von dem Blockelement (2Aj) aufgenommen wird.

2. Vorrichtung nach Anspruch 1, bei der das zweite Anpresselement (2Ai) abgesetzt ist, wobei sich einer seiner Schenkel axial in die Führungsnut (2Af) erstreckt und die Schraube (2Ad) aufnimmt, während ein radialer Schenkel an dem zylindrischen Innenwandbereich angreift.

3. Vorrichtung nach einem der vorhergehenden Ansprüche, bei der die Führungsnut (2Af) an der Peripherie des Blockelements (2Aj) vorgesehen ist.

4. Vorrichtung nach einem der vorhergehenden Ansprüche, bei der die Schraube (2Ad) einen Kopf aufweist, der sich von der Vorrichtung außerhalb des rotierenden Elements (2; 4) nach außen erstreckt.

5. Vorrichtung nach einem der vorhergehenden Ansprüche, bei der das rotierende Element (2; 4) eine Zulieferungs- oder Aufwickelrolle ist, die häufig ausgetauscht wird und mit einem zylindrischen Kern versehen ist, wie sie bei einem Filmlaminator verwendet wird.

## Revendications

1. Appareil pour caler un organe rotatif (2; 4) sur un arbre (2B; 4A) par des moyens de serrage, lesdits moyens de serrage comprenant un premier élément de pression (2Ac) adapté sur et en prise avec cet arbre, un deuxième élément de pression (2Ai) en prise avec une partie de paroi intérieure dudit organe rotatif (2; 4) et une vis (2Ad) en prise par filetage avec l'un au moins desdits éléments de pression (2Ac, 2Ai) et agencée de manière à solliciter ceux-ci à l'opposé l'un de l'autre en direction axiale par rapport audit arbre (2B; 4A), ledit deuxième élément de pression (2Ai) étant reçu dans une gorge de guidage (2Af), l'appareil étant caractérisé en ce que

ladite partie de paroi intérieure dudit organe rotatif (2; 4) est cylindrique,

ladite gorge de guidage (2Af) est pratiquée dans un corps séparé (2Aj) reçu dans ledit organe rotatif (2; 4), une partie au moins dudit corps étant entourée de façon adaptée par ladite partie cylindrique de paroi intérieure,

ledit deuxième élément de pression (2Ai) est en prise avec ladite partie cylindrique de paroi intérieure, et

ledit premier élément de pression (2Ac) consiste en un manchon s'adaptant sur ledit arbre (2B; 4A) et reçu dans ledit corps (2Aj).

2. Appareil selon la revendication 1, dans lequel ledit deuxième élément de pression (2Ai) est décalé, une branche de celui-ci s'étendant axialement dans ladite gorge de guidage (2Af) et recevant ladite vis (2Ad), tandis qu'une branche radiale est en prise avec ladite partie cylindrique de paroi intérieure.

3. Appareil selon l'une quelconque des revendications précédentes, dans lequel ladite gorge de guidage (2Af) est pratiquée à la périphérie dudit corps (2Aj).

4. Appareil selon l'une quelconque des revendications précédentes, dans lequel ladite vis (2Ad) comprend une tête s'étendant vers l'extérieur à partir dudit appareil et à l'extérieur dudit organe rotatif (2; 4).

5. Appareil selon l'une quelconque des revendications précédentes, dans lequel ledit organe rotatif (2; 4) est un cylindre d'alimentation ou d'enroulement destiné à être remplacé fréquemment et comprenant un noyau cylindrique tel que ceux utilisés dans un dispositif pour stratifier des pellicules.

FIG. 1

## FIG. 2

## FIG. 3

FIG. 4

# FIG. 5

*FIG. 6*

*FIG. 7*